# EUROPEAN PATENT SPECIFICATION

(11) **EP 3 560 802 B1**
(45) Date of publication and mention of the grant of the patent: **08.06.2022**
(21) Application number: 18169781.4
(22) Date of filing: 27.04.2018
(51) Int. Cl.: B62D 55/04, B62D 55/20

(54) **TRACK SECTION WITH CROSSBAR MEMBER AND TRACK BELT FORMED BY SUCH TRACK SECTIONS**
RAUPENABSCHNITT MIT QUERSTREBE UND DURCH SOLCHE RAUPENABSCHNITTE GEFORMTE RAUPENKETTE
SECTION DE PISTE AVEC ÉLÉMENT À BARRE TRANSVERSALE ET COURROIE DE CHENILLE FORMÉE PAR DE TELLES SECTIONS DE PISTE

(43) Date of publication of application: 30.10.2019
(73) Proprietor: Olofsfors AB, 914 91 Nordmaling (SE)
(72) Inventor: Frangén, Mats, 914 31 Nordmaling (SE)
(74) Representative: Bjerkén Hynell KB

(56) References cited:
- WO-A1-02/051692
- WO-A1-2011/142701
- US-A- 4 089 565

## Description

### FIELD OF THE INVENTION AND PRIOR ART

The present invention relates to a track section according to the preamble of claim 1, which is adapted to be linked to a plurality of similar track sections to form a track belt for mounting around the outer periphery of vehicle tyres. The invention also relates to a track belt formed by several such track sections.

Track belts which may be removably mounted around tyres on vehicles wheel are known in several different designs. Such a track belt can be used in order to obtain better friction and traction between the vehicle tyres and the ground for a vehicle, particularly on wet, slippery or muddy terrain, or in order to increase the carrying capacity of a vehicle.

A track section according to the preamble of claim 1 is previously known from US 4 089 565 A, WO 99/37525 A1 and WO 2011/142701 A1.

### OBJECT OF THE INVENTION

The object of the present invention is to provide a track section of the above-mentioned type having a new and favourable design.

### SUMMARY OF THE INVENTION

According to the invention, said object is achieved by means of a track section having the features defined in claim 1.

The track section according to the invention comprises:
- an elongated crossbar member having a tyre-facing inner side and an opposite outer side, wherein a ground engageable support surface is provided on the outer side of the crossbar member, the track section being configured to rest against the ground via this support surface when the track section is in contact with the ground; and
- two lateral support members mounted to the crossbar member at opposite end sections thereof, the support members protruding on the inner side of the crossbar member and being spaced apart to allow a tyre to be received between the support members with the crossbar member extending across and being in contact with the envelope surface of the tyre.

Said support surface on the crossbar member comprises a first elongated support surface section provided on an elongated first part of the crossbar member and a second elongated support surface section provided on an elongated second part of the crossbar member, the first and second elongated support surface sections extending in parallel with each other in the longitudinal direction of the crossbar member on opposite sides of a longitudinal centre line of the crossbar member, wherein each one of these elongated support surface sections is undulated, at least over a major part of its longitudinal extension, so as to form undulated support surface areas with wave crests and wave troughs extending in the cross-direction of the crossbar member. The undulations on said first and second elongated support surface sections will improve the grip between the crossbar member and the ground when the crossbar member is in contact with the ground. Furthermore, the undulated support surface areas may at the same time form rather smooth and large interfaces between the crossbar member and the ground, which will give the track section a good carrying capacity and which also implies that the track section will be able to bear against the ground in a gentle manner through a rather large interface area. A large area of the interface between the crossbar member and the ground will give a low surface pressure on the ground from the crossbar member, which in its turn will reduce the damages to the ground caused by the crossbar member.

According to an embodiment of the invention, the wave crests and wave troughs on the first elongated support surface section are offset in relation to the wave crests and wave troughs on the second elongated support surface section as seen in the longitudinal direction of the crossbar member, wherein each wave crest on the first elongated support surface section is located opposite a wave trough on the second elongated support surface section, and vice versa. This arrangement of the wave crests and wave troughs will give improved grip between the crossbar member and the ground.

According to another embodiment of the invention, each elongated support surface section comprises two such undulated support surface areas, which are spaced apart as seen in the longitudinal direction of the elongated support surface section and separated from each other by a non-undulated intermediate support surface area located in the middle of the elongated support surface section. Each one of the above-mentioned elongated first and second parts of the crossbar member is subjected to the highest stress at its middle. Furthermore, there is a risk for stress concentration in the wave crests formed in the elongated first and second parts of the crossbar member. By avoiding undulations at the middle of the elongated first and second parts of the crossbar member there is no risk for stress concentration at the middle of these parts where the stress is at its highest, which in its turn will reduce the risk for breakage of the crossbar member.

Another embodiment of the invention is characterized in:
- that the crossbar member comprises an elongated third part located between said first and second parts of the crossbar member, wherein the first and second parts of the crossbar member are separated from each other by the intermediate third part of the crossbar member; and
- that at least one tyre-engaging element protrudes on the inner side of the crossbar member in the area between the support members, this tyre-engaging element being provided on or formed by said third part of the crossbar member and being configured for engagement with the envelop surface of a tyre received between the support members.

The tyre-engaging element on the crossbar member will give improved grip between the crossbar member and a tyre received between the lateral support members of the track section. Further advantageous features of the track section according to the present invention will appear from the description following below and the dependent claims.

The invention also relates to a track belt having the features defined in claim 14.

### BRIEF DESCRIPTION OF THE DRAWING

With reference to the appended drawing, a specific description of embodiments of the invention cited as examples follows below. In the drawings:
- Fig 1: is a perspective view of a track section according to an embodiment of the present invention,
- Fig 2: is a perspective view from another direction of the track section of Fig 1,
- Fig 3: is a lateral view of the track section of Fig 1,
- Fig 4: is a planar view of the track section of Fig 1,
- Fig 5: is a cross-sectional view of the track section of Fig 1,
- Fig 6: is a perspective view of a track belt formed by interconnected track sections of the type illustrated in Figs 1-5, with the track belt mounted around the outer periphery of two vehicle tyres, and
- Fig 7: is a lateral view of the track belt and vehicle tyres of Fig 6.

### DETAILED DESCRIPTION OF EMBODIMENTS OF THE INVENTION

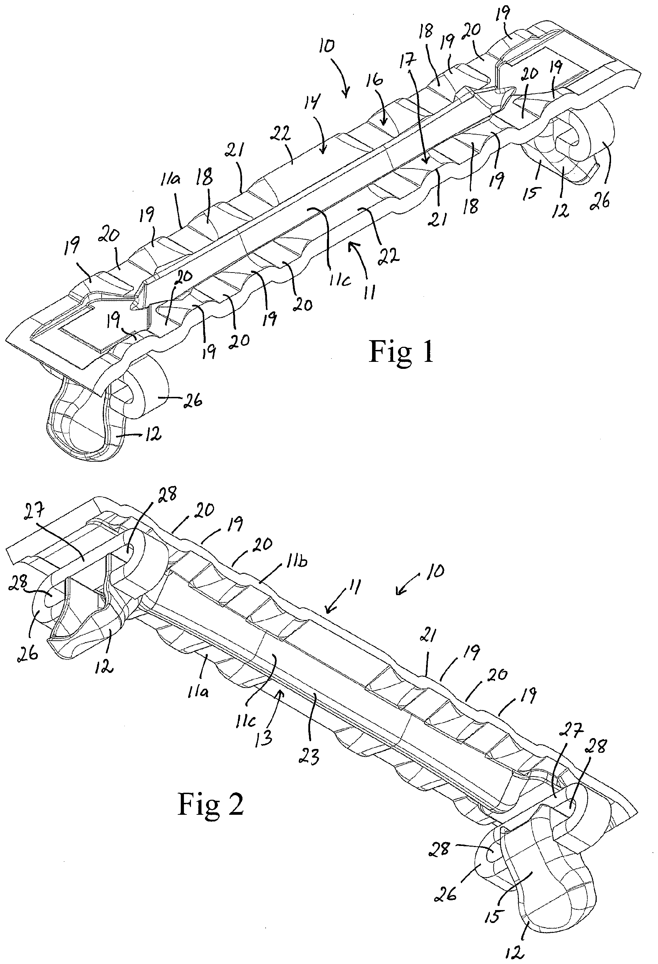

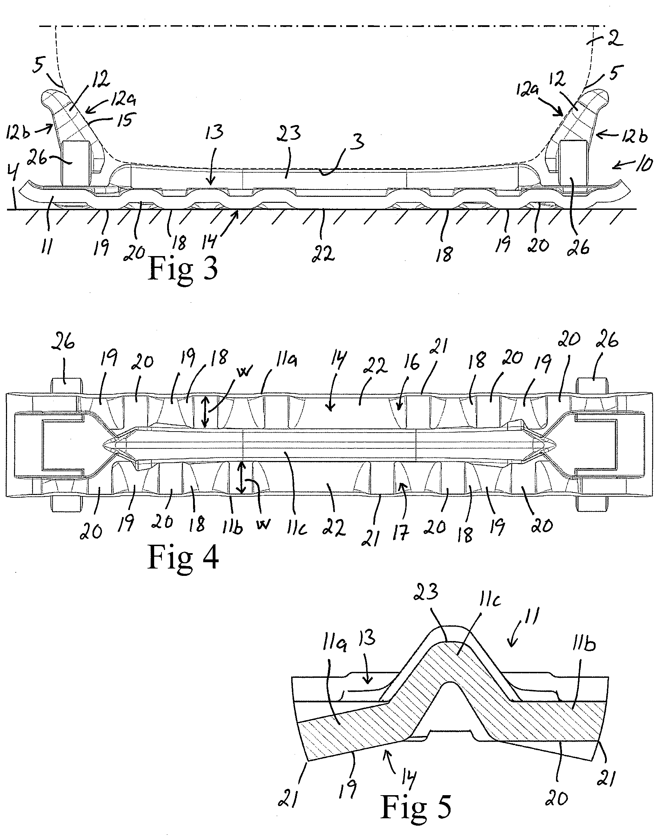

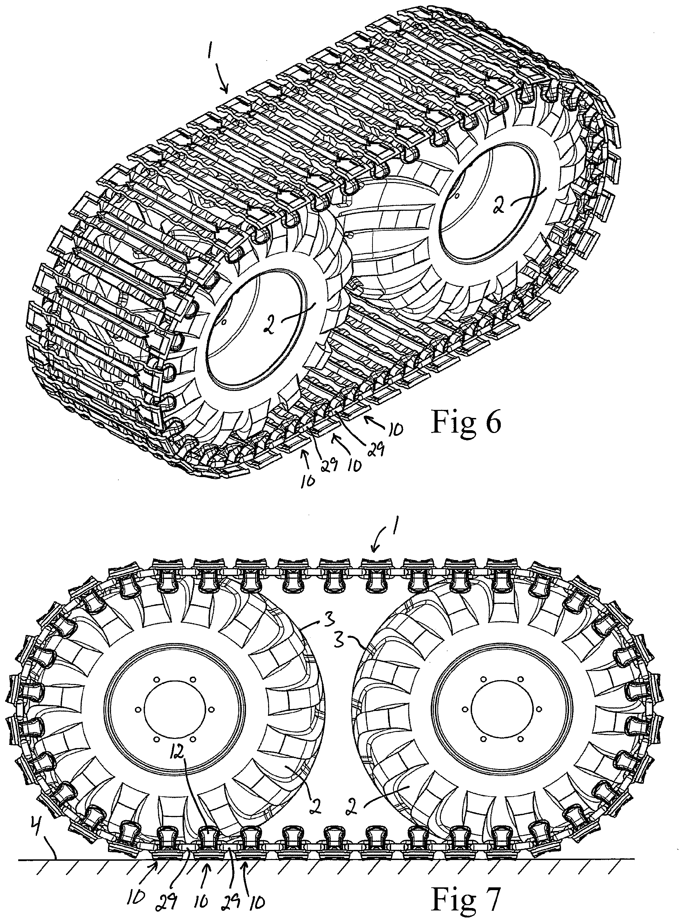

A track section 10 according to an embodiment of the present invention is illustrated in Figs 1-5. This track section 10 is to be linked to a plurality of similar track sections to form a flexible track belt 1 (see Figs 6 and 7) for mounting around the outer periphery of vehicle tyres 2. The track section 10 comprises an elongated crossbar member 11 and two lateral support members 12 mounted to the crossbar member 11 at opposite end sections thereof. The crossbar member 11 has a tyre-facing inner side 13 and an opposite outer side 14. Thus, said inner side 13 is configured for engagement with the envelope surface 3 of a vehicle tyre 2 (as schematically illustrated in Fig 3), whereas said outer side 14 is configured for engagement with the ground 4.

The support members 12 protrude on the inner side 13 of the crossbar member 11. The support members 12 are spaced apart in the longitudinal direction of the crossbar member 11 to allow a tyre 2 of a vehicle wheel to be received between the support members 12 with the crossbar member 11 extending across and being in contact with the envelope surface 3 of the tyre 2 and with the support members 12 facing a respective one of the two opposed sidewalls 5 of the tyre, as illustrated in Fig 3, where the lower part of a tyre 2 is schematically illustrated in broken lines. Each support member 12 has a first side 12a (see Fig 3) facing the other support member and an opposite second side 12b facing away from the other support member. A contact surface 15 is provided on said first side 12a of each support member for engagement with the outer surface of a tyre 2 received between the support members 12. In the illustrated embodiment, the support members 12 are designed in the manner described in closer detail in WO 2011/142701 A1. However, the support members 12 may as an alternative have any other suitable design.

A ground engageable support surface is provided on the outer side 14 of the crossbar member 11, wherein the track section 10 is configured to rest against the ground 4 via this support surface when the track section 10 is in contact with the ground 4. The support surface comprises a first elongated support surface section 16 provided on an elongated first part 11a of the crossbar member 11 and a second elongated support surface section 17 provided on an elongated second part 11b of the crossbar member 11, wherein the first and second elongated support surface sections 16, 17 extend in parallel with each other in the longitudinal direction of the crossbar member 11 and at a distance from each other on opposite sides of a longitudinal centre line of the crossbar member

In order to improve the grip against the ground, each one of the elongated support surface sections 16, 17 is undulated, at least over a major part of its longitudinal extension, so as to form undulated support surface areas 18 with wave crests 19 and wave troughs 20 extending in the cross-direction of the crossbar member 11. Hereby, undulated edges 21 are formed along the opposite long sides of the crossbar member 11. These undulated edges 21 improve the grip between the crossbar member 11 and the ground 4 when the crossbar member is in contact with the ground.

Each one of said undulated support surface areas 18 has a width w (see Fig 4) of at least 3 cm, preferably at least 5 cm.

The wave crests 19 and wave troughs 20 on the first elongated support surface section 16 are preferably offset in relation to the wave crests 19 and wave troughs 20 on the second elongated support surface section 17 as seen in the longitudinal direction of the crossbar member 11, as illustrated in Figs 1-5, wherein each wave crest 19 on the first elongated support surface section 16 is located opposite a wave trough 20 on the second elongated support surface section 17 and each wave crest 19 on the second elongated support surface section 17 is located opposite a wave trough 20 on the first elongated support surface section 16. However, as an alternative, the wave crests 19 on the first elongated support surface section 16 may be arranged directly opposite the wave crests 19 on the second elongated support surface section 17.

In the embodiment illustrated in Figs 1-4, each elongated support surface section 16, 17 comprises two undulated support surface areas 18, which are spaced apart as seen in the longitudinal direction of the elongated support surface section 16, 17 and separated from each other by a non-undulated intermediate support surface area 22 located in the middle of the elongated support surface section 16, 17. Each one of the undulated support surface areas 18 is preferably provided with at least three wave crests 19 which are separated from each other by intermediate wave troughs 20.

The crossbar member 11 also comprises an elongated third part 11c located between said first and second parts 11a, 11b of the crossbar member, wherein the first and second parts 11a, 11b of the crossbar member are separated from each other by the intermediate third part 11c of the crossbar member. At least one tyre-engaging element 23 protrudes on the inner side 13 of the crossbar member 11 in the area between the support members 12, wherein this tyre-engaging element 23 is provided on or formed by said third part 11c of the crossbar member and configured for engagement with the envelop surface 3 of a tyre 2 received between the support members 12. In the illustrated embodiment, the crossbar member 11 is provided with one continuous such tyre-engaging element 23 formed as a depression in said third part 11c of the crossbar member. As an alternative, the third part 11c of the crossbar member may be essentially flat, wherein one or more tyre-engaging elements may be fixed to this part 11c by welding.

In the embodiment illustrated in Figs 1-5, each wave trough 20 has an essentially flat bottom surface. However, the bottom surface of one or more of the wave troughs 20 may as an alternative be curved as seen in the longitudinal direction of the crossbar member 11.

In the embodiment illustrated in Figs 1-5, each wave crest 19 is inclined downwards towards the longitudinal centre line of the crossbar member 11, as clearly illustrated in Fig 5. The above-mentioned non-undulated intermediate support surface areas 22 are in the same manner inclined downwards towards the longitudinal centre line of the crossbar member 11. The purpose of this inclination of the wave crests 19 and the intermediate support surface areas 22 is to avoid the formation of sharp pockets on the inner side 13 of the crossbar member 11 where debris, mud and the similar could get stuck and impair the grip between the crossbar member 11 and the envelop surface 3 of a tyre 2 received between the support members 12.

Each one of said first and second elongated parts 11a, 11b of the crossbar member preferably has a thickness of 10-20 mm. The length of the crossbar member 11 is preferably between 600 and 1400 mm and the width of the crossbar member 11 is preferably between 100 and 200 mm. The crossbar member 11 is made of steel and is with advantage formed in one piece.

In the illustrated example, each support member 12 is secured to an end section of the crossbar member 11 through a C-shaped connection member 26, a so-called link hook, which is secured to the crossbar member 11 by welding. The support member 12 rests against a base part 27 of the connection member 26 and is secured to this base part 27 by welding. A first opening 28 (see Fig 4) for receiving a first link element 29 (see Fig 7) is formed on a first side of the support member 12 between the connection member 26 and a first lateral wall of the support member 12 and a second opening 28 for receiving a second link element 29 is formed on the opposite side of the support member 12 between the connection member 26 and a second lateral wall of the support member 12.

Several track sections 10 of the type described above are interconnected by means of link elements 29 to form a flexible track belt 1, as illustrated in Figs 6 and 7. Each link element 29 is received in an opening 28 of a connection member 26 of a first track section 10 and in an opening 28 of a connection member 26 of another adjacent track section 10. The link elements 29 will act as hinges between the track sections 10. The track section 1 is mounted around the outer periphery of two or more vehicle tyres 2 with the crossbar members 11 extending in the cross-direction of the tyres and with the support members 12 facing the tyres. The support members 12 will keep the track belt 1 correctly positioned on the tyres 2 and will prevent the track belt 1 from slipping off the tyres 2. At the part of a tyre 2 where the tyre bears against the ground 4, the sidewalls 5 of the tyre will bulge due to the load from the vehicle and the sidewalls 5 will thereby come into contact with the two opposed support members 12 of a track section 10 received between the tyre 2 and the ground 4, as illustrated in Fig 3.

## Claims

1. A track section adapted to be linked to a plurality of similar track sections to form a track belt for mounting around the outer periphery of vehicle tyres, wherein the track section (10) comprises:
- an elongated crossbar member (11) having a tyre-facing inner side (13) and an opposite outer side (14), wherein a ground engageable support surface is provided on the outer side (14) of the crossbar member, the track section (10) being configured to rest against the ground via this support surface when the track section (10) is in contact with the ground; and
- two lateral support members (12) mounted to the crossbar member (11) at opposite end sections thereof, the support members (12) protruding on the inner side (13) of the crossbar member (11) and being spaced apart to allow a tyre (2) to be received between the support members (12) with the crossbar member (11) extending across and being in contact with the envelope surface (3) of the tyre,
**characterized in that** said support surface comprises a first elongated support surface section (16) provided on an elongated first part (11a) of the crossbar member (11) and a second elongated support surface section (17) provided on an elongated second part (11b) of the crossbar member (11), the first and second elongated support surface sections (16, 17) extending in parallel with each other in the longitudinal direction of the crossbar member (11) on opposite sides of a longitudinal centre line of the crossbar member (11), wherein each one of these elongated support surface sections (16, 17) is undulated, at least over a major part of its longitudinal extension, so as to form undulated support surface areas (18) with wave crests (19) and wave troughs (20) extending in the cross-direction of the crossbar member (11).

2. A track section according to claim 1, **characterized in that** each one of said undulated support surface areas (18) has a width (w) of at least 3 cm, preferably at least 5 cm.

3. A track section according to claim 1 or 2, **characterized in that** the wave crests (19) and wave troughs (20) on the first elongated support surface section (16) are offset in relation to the wave crests (19) and wave troughs (20) on the second elongated support surface section (17) as seen in the longitudinal direction of the crossbar member (11), wherein each wave crest (19) on the first elongated support surface section (16) is located opposite a wave trough (20) on the second elongated support surface section (17), and vice versa.

4. A track section according to any of claims 1-3, **characterized in that** each elongated support surface section (16, 17) comprises two such undulated support surface areas (18), which are spaced apart as seen in the longitudinal direction of the elongated support surface section (16, 17) and separated from each other by a non-undulated intermediate support surface area (22) located in the middle of the elongated support surface section (16, 17).

5. A track section according to any of claims 1-4, **characterized in that** each one of said undulated support surface areas (18) is provided with at least three wave crests (19) which are separated from each other by intermediate wave troughs (20).

6. A track section according to any of claims 1-5, **characterized in that** each wave trough (20) has an essentially flat bottom surface.

7. A track section according to any of claims 1-6, **characterized in that** each wave crest (19) is inclined downwards towards the longitudinal centre line of the crossbar member (11).

8. A track section according to any of claims 1-7, **characterized in that** said first and second elongated parts (11a, 11b) of the crossbar member have a thickness of 10-20 mm.

9. A track section according to any of claims 1-8, **characterized in:**
- **that** the crossbar member (11) comprises an elongated third part (11c) located between said first and second parts (11a, 11b) of the crossbar member, wherein the first and second parts (11a, 11b) of the crossbar member are separated from each other by the intermediate third part (11c) of the crossbar member; and
- **that** at least one tyre-engaging element (23) protrudes on the inner side (13) of the crossbar member (11) in the area between the support members (12), this tyre-engaging element (23) being provided on or formed by said third part (11c) of the crossbar member and being configured for engagement with the envelop surface (3) of a tyre (2) received between the support members (12).

10. A track section according to claim 9, **characterized in that**
said tyre-engaging element (23) is formed as a depression in said third part (11c) of the crossbar member.

11. A track section according to any of claims 1-10,
**characterized in that** the crossbar member (11) has a length of 600-1400 mm.

12. A track section according to any of claims 1-11,
**characterized in that** the crossbar member (11) is formed in one piece.

13. A track section according to any of claims 1-12,
**characterized in that** the crossbar member (11) is made of steel.

14. A track belt for mounting around the outer periphery of vehicle
tyres, **characterized in that** the track belt (1) is formed by several track sections (10) according to any of claims 1-13 connected to each other by means of link elements (29).

## Patentansprüche

1. Raupenabschnitt, der so angepasst ist, dass er mit einer Vielzahl von ähnlichen Raupenabschnitten verbunden wird, sodass eine Raupenkette zum Montieren um den äußeren Umfang von Fahrzeugreifen gebildet wird, wobei der Raupenabschnitt (10) umfasst:
- ein längliches Querstrebenelement (11), das eine dem Reifen zugewandte Innenseite (13) und eine entgegengesetzte Außenseite (14) aufweist, wobei eine mit dem Boden in Eingriff bringbare Tragoberfläche auf der Außenseite (14) des Querstrebenelements bereitgestellt ist, wobei der Raupenabschnitt (10) so ausgestaltet ist, dass er über diese Tragoberfläche gegen den Boden anliegt, wenn der Raupenabschnitt (10) mit dem Boden in Kontakt ist; und
- zwei seitliche Stützelemente (12), die an dem Querstrebenelement (11) an entgegengesetzten Endabschnitten davon montiert sind, wobei die Stützelemente (12) so auf der Innenseite (13) des Querstrebenelements (11) hervorstehen und voneinander beabstandet sind, dass das Aufnehmen eines Reifens (2) zwischen den Stützelementen (12) ermöglicht wird, wobei das Querstrebenelement (11) sich durch die Manteloberfläche (3) des Reifens erstreckt und in Kontakt damit ist,
**dadurch gekennzeichnet, dass** die Tragoberfläche einen ersten länglichen Tragoberflächenabschnitt (16), der an einem länglichen ersten Teil (11a) des Querstrebenelements (11) bereitgestellt ist, und einen zweiten länglichen Tragoberflächenabschnitt (17) umfasst, der an einem länglichen zweiten Teil (11b) des Querstrebenelements (11) bereitgestellt ist, wobei der erste und der zweite längliche Tragoberflächenabschnitt (16, 17) sich in der Längsrichtung des Querstrebenelements (11) auf entgegengesetzten Seiten einer Längsmittellinie des Querstrebenelements (11) parallel zueinander erstrecken, wobei jeder von diesen länglichen Tragoberflächenabschnitten (16, 17) über mindestens einen Großteil seiner Längsausdehnung gewellt ist, sodass gewellte Tragoberflächenbereiche (18) mit Wellenbergen (19) und Wellentälern (20) gebildet werden, die sich in der Querrichtung des Querstrebenelements (11) erstrecken.

2. Raupenabschnitt nach Anspruch 1, **dadurch gekennzeichnet, dass** jeder der gewellten Tragoberflächenbereiche (18) eine Breite (w) von mindestens 3 cm, vorzugsweise mindestens 5 cm, aufweist.

3. Raupenabschnitt nach Anspruch 1 oder 2, **dadurch gekennzeichnet, dass** die Wellenberge (19) und Wellentäler (20) auf dem ersten länglichen Tragoberflächenabschnitt (16) in Bezug auf die Wellenberge (19) und Wellentäler (20) auf dem zweiten länglichen Tragoberflächenabschnitt (17), in der Längsrichtung des Querstrebenelements (11) betrachtet, versetzt sind, wobei jeder Wellenberg (19) auf dem ersten länglichen Tragoberflächenabschnitt (16) sich entgegengesetzt zu einem Wellental (20) auf dem zweiten länglichen Tragoberflächenabschnitt (17) befindet und umgekehrt.

4. Raupenabschnitt nach einem der Ansprüche 1 bis 3, **dadurch gekennzeichnet, dass** jeder längliche Tragoberflächenabschnitt (16, 17) zwei solche gewellte Tragoberflächenbereiche (18) umfasst, die, in der Längsrichtung des länglichen Tragoberflächenabschnitts (16, 17) betrachtet, voneinander beabstandet und von einem nicht gewellten Zwischentragoberflächenbereich (22) getrennt sind, der sich in der Mitte des länglichen Tragoberflächenabschnitts (16, 17) befindet.

5. Raupenabschnitt nach einem der Ansprüche 1 bis 4, **dadurch gekennzeichnet, dass** jeder der gewellten Tragoberflächenbereiche (18) mit mindestens drei Wellenbergen (19) versehen ist, die durch Zwischenwellentäler (20) voneinander getrennt sind.

6. Raupenabschnitt nach einem der Ansprüche 1 bis 5, **dadurch gekennzeichnet, dass** jedes Wellental (20) eine im Wesentlichen flache Bodenoberfläche aufweist.

7. Raupenabschnitt nach einem der Ansprüche 1 bis 6, **dadurch gekennzeichnet, dass** jeder Wellenberg (19) nach unten hin zur Längsmittellinie des Querstrebenelements (11) geneigt ist.

8. Raupenabschnitt nach einem der Ansprüche 1 bis 7, **dadurch gekennzeichnet, dass** der erste und der zweite längliche Teil (11a, 11b) des Querstrebenelements eine Dicke von 10 bis 20 mm aufweisen.

9. Raupenabschnitt nach einem der Ansprüche 1 bis 8, **dadurch gekennzeichnet, dass**:
- das Querstrebenelement (11) einen länglichen dritten Teil (11c) umfasst, der sich zwischen dem ersten und dem zweiten Teil (11a, 11b) des Querstrebenelements befindet, wobei der erste und der zweite Teil (11a, 11b) des Querstrebenelements durch den dritten Zwischenteil (11c) des Querstrebenelements voneinander getrennt sind; und
- das mindestens eine Reifeneingriffselement (23) auf der Innenseite (13) des Querstrebenelements (11) im Bereich zwischen den Stützelementen (12) hervorsteht, wobei dieses Reifeneingriffselement (23) auf dem dritten Teil (11c) des Querstrebenelements bereitgestellt oder davon gebildet ist und für den Eingriff mit der Manteloberfläche (3) eines zwischen den Stützelementen (12) aufgenommenen Reifens (2) ausgestaltet ist.

10. Raupenabschnitt nach Anspruch 9, **dadurch gekennzeichnet, dass** das Reifeneingriffselement (23) als eine Vertiefung in dem dritten Teil (11c) des Querstrebenelements gebildet ist.

11. Raupenabschnitt nach einem der Ansprüche 1 bis 10, **dadurch gekennzeichnet, dass** das Querstrebenelement (11) eine Länge von 600 bis 1400 mm aufweist.

12. Raupenabschnitt nach einem der Ansprüche 1 bis 11, **dadurch gekennzeichnet, dass** das Querstrebenelement (11) in einem Stück gebildet ist.

13. Raupenabschnitt nach einem der Ansprüche 1 bis 12, **dadurch gekennzeichnet, dass** das Querstrebenelement (11) aus Stahl besteht.

14. Raupenkette zum Montieren um den äußeren Umfang von Fahrzeugreifen, **dadurch gekennzeichnet, dass** die Raupenkette (1) aus mehreren Raupenabschnitten (10) nach einem der Ansprüche 1 bis 13 gebildet ist, die mittels Verbindungselementen (29) miteinander verbunden sind.

## Revendications

1. Section de chenille apte à être reliée à une pluralité de sections de chenille similaires pour former une bande de chenille destinée à être montée autour de la périphérie extérieure de pneus de véhicule, dans laquelle la section de chenille (10) comprend :
- un élément à barre transversale allongée (11) comportant un côté intérieur (13) faisant face au pneu et un côté extérieur (14) opposé, dans laquelle une surface de support pouvant venir en prise avec le sol est prévue sur le côté extérieur (14) de l'élément à barre transversale, la section de chenille (10) étant configurée pour reposer contre le sol par l'intermédiaire de cette surface de support lorsque la section de chenille (10) est en contact avec le sol ; et
- deux éléments de support latéraux (12) montés sur l'élément à barre transversale (11) à des sections d'extrémité opposées de celui-ci, les éléments de support (12) faisant saillie sur le côté intérieur (13) de l'élément à barre transversale (11) et étant espacés l'un de l'autre pour permettre à un pneu (2) d'être reçu entre les éléments de support (12) avec l'élément à barre transversale (11) s'étendant à travers et étant en contact avec la surface d'enveloppe (3) du pneu,
**caractérisée en ce que** ladite surface de support comprend une première section allongée de surface de support (16) prévue sur une première partie allongée (11a) de l'élément à barre transversale (11) et une seconde section allongée de surface de support (17) prévue sur une deuxième partie allongée (11b) de l'élément à barre transversale (11), les première et seconde sections allongées de surface de support (16, 17) s'étendant parallèlement l'une à l'autre dans la direction longitudinale de l'élément à barre transversale (11) sur des côtés opposés d'une ligne centrale longitudinale de l'élément à barre transversale (11), dans laquelle chacune de ces sections allongées de surface de support (16, 17) est ondulée, au moins sur une partie majeure de son extension longitudinale, de manière à former des zones ondulées de surface de support (18) avec des crêtes d'ondulation (19) et des creux d'ondulation (20) s'étendant dans la direction transversale de l'élément à barre transversale (11).

2. Section de chenille selon la revendication 1, **caractérisée en ce que** chacune desdites zones ondulées de surface de support (18) présente une largeur (w) d'au moins 3 cm, de préférence d'au moins 5 cm.

3. Section de chenille selon la revendication 1 ou 2, **caractérisée en ce que** les crêtes d'ondulation (19) et les creux d'ondulation (20) sur la première section allongée de surface de support (16) sont décalés par rapport aux crêtes d'ondulation (19) et au creux d'ondulation (20) sur la seconde section allongée de surface de support (17) en vue dans la direction longitudinale de l'élément à barre transversale (11), dans laquelle chaque crête d'ondulation (19) sur la première section allongée de surface de support (16) est située à l'opposé d'un creux d'ondulation (20) sur la seconde section allongée de surface de support (17), et vice versa.

4. Section de chenille selon l'une quelconque des revendications 1 à 3, **caractérisée en ce que** chaque section allongée de surface de support (16, 17) comprend deux telles zones ondulées de surface de support (18), qui sont espacées l'une de l'autre en vue dans la direction longitudinale de la section allongée de surface de support (16, 17) et séparées l'une de l'autre par une zone non ondulée intermédiaire de surface de support (22) située au milieu de la section allongée de surface de support (16, 17).

5. Section de chenille selon l'une quelconque des revendications 1 à 4, **caractérisée en ce que** chacune desdites zones ondulées de surface de support (18) est pourvue d'au moins trois crêtes d'ondulation (19) qui sont séparées l'une de l'autre par des creux intermédiaires d'ondulation (20).

6. Section de chenille selon l'une quelconque des revendications 1 à 5, **caractérisée en ce que** chaque creux d'ondulation (20) comporte une surface inférieure sensiblement plate.

7. Section de chenille selon l'une quelconque des revendications 1 à 6, **caractérisée en ce que** chaque crête d'ondulation (19) est inclinée vers le bas vers la ligne centrale longitudinale de l'élément à barre transversale (11).

8. Section de chenille selon l'une quelconque des revendications 1 à 7, **caractérisée en ce que** lesdites première et deuxième parties allongées (11a, 11b) de l'élément à barre transversale présentent une épaisseur de 10 à 20 mm.

9. Section de chenille selon l'une quelconque des revendications 1 à 8, **caractérisée en ce que** :
- l'élément à barre transversale (11) comprend une troisième partie allongée (11c) située entre lesdites première et deuxième parties (11a, 11b) de l'élément à barre transversale, dans laquelle les première et deuxième parties (11a, 11b) de l'élément à barre transversale sont séparées l'une de l'autre par la troisième partie intermédiaire (11c) de l'élément à barre transversale ; et
- au moins un élément venant en prise avec un pneu (23) fait saillie sur le côté intérieur (13) de l'élément à barre transversale (11) dans la zone entre les éléments de support (12), cet élément venant en prise avec le pneu (23) étant prévu sur ou formé par ladite troisième partie (11c) de l'élément à barre transversale et étant configuré pour venir en prise avec la surface d'enveloppe (3) d'un pneu (2) reçu entre les éléments de support (12).

10. Section de chenille selon la revendication 9, **caractérisée en ce que** ledit élément venant en prise avec le pneu (23) est formé en tant qu'un évidement dans ladite troisième partie (11c) de l'élément à barre transversale.

11. Section de chenille selon l'une quelconque des revendications 1 à 10, **caractérisée en ce que** l'élément à barre transversale (11) présente une longueur de 600 à 1400 mm.

12. Section de chenille selon l'une quelconque des revendications 1 à 11, **caractérisée en ce que** l'élément à barre transversale (11) est formé d'un seul tenant.

13. Section de chenille selon l'une quelconque des revendications 1 à 12, **caractérisée en ce que** l'élément à barre transversale (11) est constitué d'acier.

14. Bande de chenille destinée à être montée autour de la périphérie extérieure de pneus de véhicule, **caractérisée en ce que** la bande de chenille (1) est formée par plusieurs sections de chenille (10) selon l'une quelconque des revendications 1 à 13 reliées l'une à l'autre au moyen d'éléments de liaison (29).
